# EUROPEAN PATENT APPLICATION

(11) **EP 3 954 751 A1**
(43) Date of publication of application: **16.02.2022**
(21) Application number: 21196730.2
(22) Date of filing: 24.10.2016
(51) Int. Cl.: C10J 3/72, C10J 3/86

(54) **ENERGY GENERATION SYSTEM**

(30) Priority: 23.10.2015 GB 201518868
(62) Divisional of application: 16785478.5
(71) Applicant: Clean Thermodynamic Energy Conversion Ltd, Newhaven, East Sussex BN9 0EX (GB)
(72) Inventor: BURNS, Michael, Newhaven, BN9 0EX (GB); BURNS, Paul, Newhaven, BN9 0EX (GB)
(74) Representative: Boden, Keith McMurray

(57) **Abstract**

A heated gas generation system for generating heated gas from waste product, the system comprising: a gasifier which includes a primary chamber for receiving waste product and includes at least one air inlet and at least one gas outlet, wherein the gasifier is controlled, in a first mode of operation, to heat the waste product to extract syngas or synthetic gas from the waste product and deliver a steam of syngas through the at least one gas outlet, and subsequently, in a second mode of operation, following extraction of syngas from the waste product, to burn the waste product to provide a stream of heated gas and deliver the stream of heated gas through the at least one gas outlet, wherein the gasifier includes a burner for igniting the waste product held in the primary chamber and an air delivery unit for delivering air into the primary chamber through the at least one air inlet of the primary chamber, wherein the air delivery unit of the gasifier is controlled to cycle between first periods in which air is delivered to the primary chamber at or above a first rate and second periods in which air is delivered to the primary chamber at or below a second rate; and a combustor which includes at least one gas inlet which is fluidly connected to the at least one gas outlet of the primary chamber, at least one air inlet and at least one gas outlet, wherein the combustor is controlled, in a first mode of operation, to burn the stream of syngas which is delivered from the primary chamber in the first mode of operation of the gasifier to generate a stream of heated gas through the at least one gas outlet of the combustor, and, in a second mode of operation, delivers the stream of heated gas which is delivered from the primary chamber in the second mode of operation of the gasifier through the at least one gas outlet of the combustor.

## Description

The present invention relates to an energy generation system for generating electrical and/or thermal energy from waste product, such as municipal solid waste (MSW) and processed waste, for example, refuse-derived waste (RDF), and in particular a system which utilizes one or more steam generators to generate power, typically electricity using electrical generators.

Various energy generation systems have been previously disclosed, such as the applicant's earlier WO-A-2013/114070 and WO-A-2013/114071. These systems do not, however, offer any means of utilizing waste product, especially municipal solid waste (MSW) and refuse-derived waste (RDF), and in particular the efficient use of generated synthetic gas or syngas.

In one aspect the present invention provides an energy generation system for generating energy from waste product, the system comprising: a gasifier which includes a primary chamber for receiving waste product and includes at least one air inlet and at least one gas outlet, wherein the gasifier is controlled, in a first mode of operation, to heat the waste product to extract syngas or synthetic gas from the waste product and deliver a stream of syngas through the at least one gas outlet, and subsequently, in a second mode of operation, following extraction of syngas from the waste product, to burn the waste produce to provide a stream of heated gas and deliver the stream of heated gas through the at least one gas outlet; a combustor which includes at least one gas inlet which is fluidly connected to the at least one gas outlet of the primary chamber, at least one air inlet and at least one gas outlet, wherein the combustor is controlled, in a first mode of operation, to burn the stream of syngas which is delivered from the primary chamber in the first mode of operation of the gasifier to generate a stream of heated gas through the at least one gas outlet of the combustor, and, in a second mode of operation, delivers the stream of heated gas which is delivered from the primary chamber in the second mode of operation of the gasifier through the at least one gas outlet of the combustor; a gas tempering unit which includes a first inlet which is fluidly connected to the at least one gas outlet of the combustor and receives the stream of heated gas therefrom, a second inlet through which a supplemental supply of gas, having a temperature lower than that of the stream of heated gas from the combustor, is delivered, and an outlet through which a tempered stream of heated gas is delivered, wherein the gas tempering unit tempers the stream of heated gas as delivered from the combustor by mixing that stream of heated gas with the supplemental supply of gas; and a superheated fluid generator which receives the tempered stream of heated gas from the gas tempering unit, and generates a superheated fluid from a working fluid.

In one embodiment the gasifier includes a burner for igniting waste product held the primary chamber, and an air delivery unit for delivering air into the primary chamber through the at least one air inlet of the primary chamber.

In one embodiment the burner of the gasifier includes an air supply and a control valve which regulates a supply of air to the burner and so controls a rate of ignition of the waste product.

In one embodiment the air delivery unit includes at least one fan which is controlled to regulate delivery of air into the primary chamber.

In one embodiment the air delivery unit comprises a check valve which fluidly connects the at least one air inlet of the primary chamber to the at least one fan of the air delivery unit, whereby the check valve prevents backflow upstream of the check valve.

In one embodiment the air delivery unit is controlled to cycle between first periods in which air is delivered to the primary chamber at or above a first rate and second periods in which air is delivered to the primary chamber at or below a second rate.

In one embodiment substantially no air is delivered to the primary chamber in the second periods.

In one embodiment the waste product is heated in batches or delivered continuously using a feed unit, such as from a hopper.

In one embodiment the combustor includes an air delivery unit which is controlled to regulate an amount of air as delivered through the at least one air inlet of the combustor.

In one embodiment the air delivery unit of the combustor includes a duct which extends at least in part through or adjacent the primary chamber, such that the air which is delivered to the combustor through the at least one air inlet thereof is pre-heated.

In one embodiment the air which is delivered to the combustor through the at least one air inlet thereof is pre-heated to a temperature of at least 350 °C.

In one embodiment the air delivery unit comprises at least one fan which is controlled to regulate delivery of air though the at least one air inlet of the combustor.

In one embodiment the combustor includes a secondary chamber which, during the first mode of operation of the gasifier, is maintained at a temperature of at least 850 °C, optionally at least 900 °C, and optionally in the range of from about 850 °C to about 1000 °C.

In one embodiment the secondary chamber is configured such that the syngas has a residence time of greater than 2 s therein, optionally at least 3 s.

In one embodiment the combustor includes at least one burner which is controlled to pre-heat the secondary chamber.

In one embodiment the gasifier is controlled, in the second mode of operation, to maintain the secondary chamber at a temperature of at least 1000 °C, optionally at least 1100 °C, to provide a stream of heated air to the combustor at a temperature of at least 1000 °C, optionally at least 1100 °C.

In one embodiment the gas tempering unit tempers the stream of heated gas to a temperature of from about 425 °C to about 650 °C.

In one embodiment the superheated fluid generator comprises a housing which defines a gas flow path and has an inlet at one, upstream end thereof which is fluidly connected to the outlet of the gas tempering unit and into which the tempered stream of heated gas is delivered, and an outlet at the other, downstream end thereof through which the tempered stream of heated gas exhausts, and a superheated fluid generation assembly which is disposed within the gas flow path of the housing.

In one embodiment the supplemental gas supply is from an exhaust gas flow.

In one embodiment the system further comprises: a re-circulation unit though which exhaust gas which is exhausted though the superheated steam generator is partially re-circulated into the gas tempering unit.

In one embodiment the re-circulation unit comprises an inlet which is fluidly connected to the outlet of the superheated steam generator, a first outlet which is fluidly connected to the gas tempering unit, a second outlet which is fluid connected to atmosphere, and a gas flow unit which is fluidly connected between the inlet and the first outlet and is controllable to re-circulate a fraction of the exhaust gas to the gas tempering unit to temper the stream of heated gas which is supplied from the combustor.

In one embodiment the gas flow unit comprises a re-circulation fan.

In another aspect the present invention provides a heated gas generation system for generating heated gas from waste product, the system comprising: a gasifier which includes a primary chamber for receiving waste product and includes at least one air inlet and at least one gas outlet, wherein the gasifier is controlled, in a first mode of operation, to heat the waste product to extract syngas or synthetic gas from the waste product and deliver a steam of syngas through the at least one gas outlet, and subsequently, in a second mode of operation, following extraction of syngas from the waste product, to burn the waste product to provide a stream of heated gas and deliver the stream of heated gas through the at least one gas outlet; and a combustor which includes at least one gas inlet which is fluidly connected to the at least one gas outlet of the primary chamber, at least one air inlet and at least one gas outlet, wherein the combustor is controlled, in a first mode of operation, to burn the stream of syngas which is delivered from the primary chamber in the first mode of operation of the gasifier to generate a stream of heated gas through the at least one gas outlet of the combustor, and, in a second mode of operation, delivers the stream of heated gas which is delivered from the primary chamber in the second mode of operation of the gasifier through the at least one gas outlet of the combustor.

In one embodiment the system further comprises: a gas tempering unit which includes a first iniet which is fluidly connected to the at least one gas outlet of the combustor and receives the stream of heated gas therefrom, a second inlet through which a supplemental supply of gas, having a temperature lower than that of the stream of heated gas from the combustor, is delivered, and an outlet through which a tempered stream of heated gas is delivered, wherein the gas tempering unit tempers the stream of heated gas as delivered from the combustor by mixing that stream of heated gas with the supplemental supply of gas.

In one embodiment the waste product is a solid waste refuse-derived fuel (RDF), a municipal solid waste (MSW), medical waste, bio-medical waste, agricultural waste, plant waste, animal waste, biomass, textile waste, food waste, pulp waste, tyre waste, plastic waste, manufacturing waste, or any combination thereof.

In one embodiment the waste product is combined with a material of higher calorific value, optionally the material of higher calorific value is mixed with the waste product, and optionally the material of higher calorific value is a waste product.

In a further aspect the present invention provides a method of generating heated gas from waste product using the above-described system.

Preferred embodiments of the present invention will now be described hereinbelow by way of example only with reference to the accompanying drawings, in which:

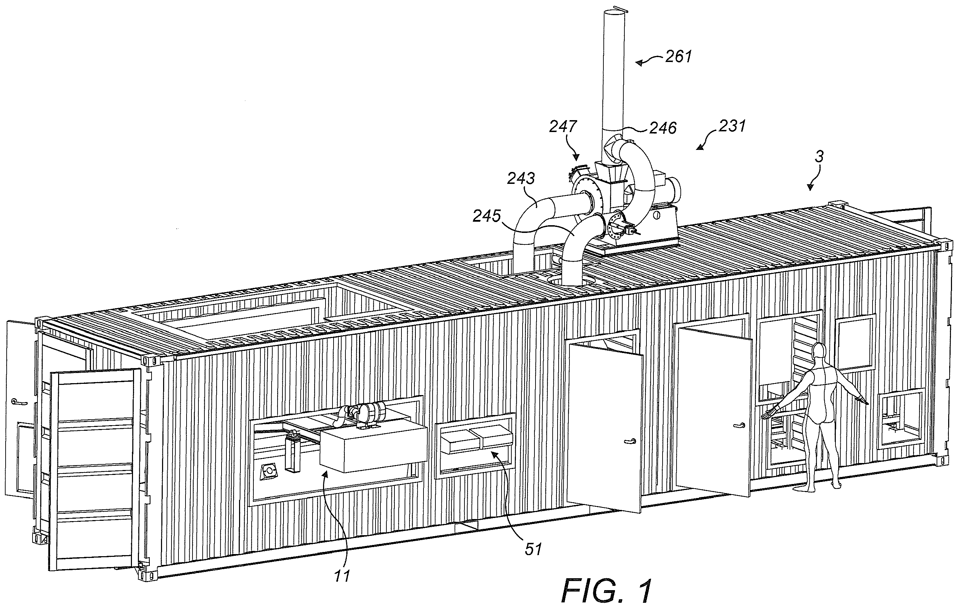

Figure 1 illustrates a perspective view of an energy generation system in accordance with a preferred embodiment of the present invention;

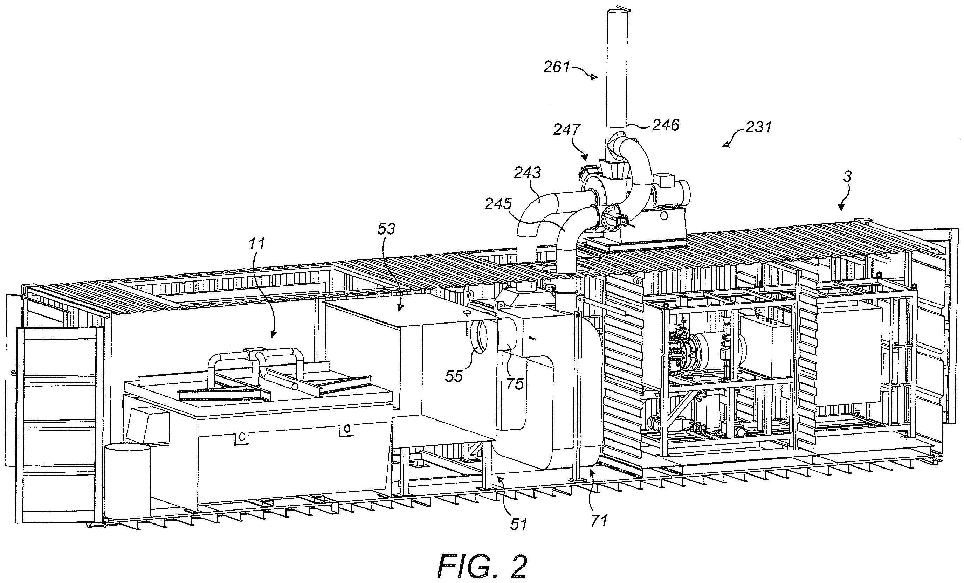

Figure 2 illustrates a cut-away perspective view of the system of Figure 1;

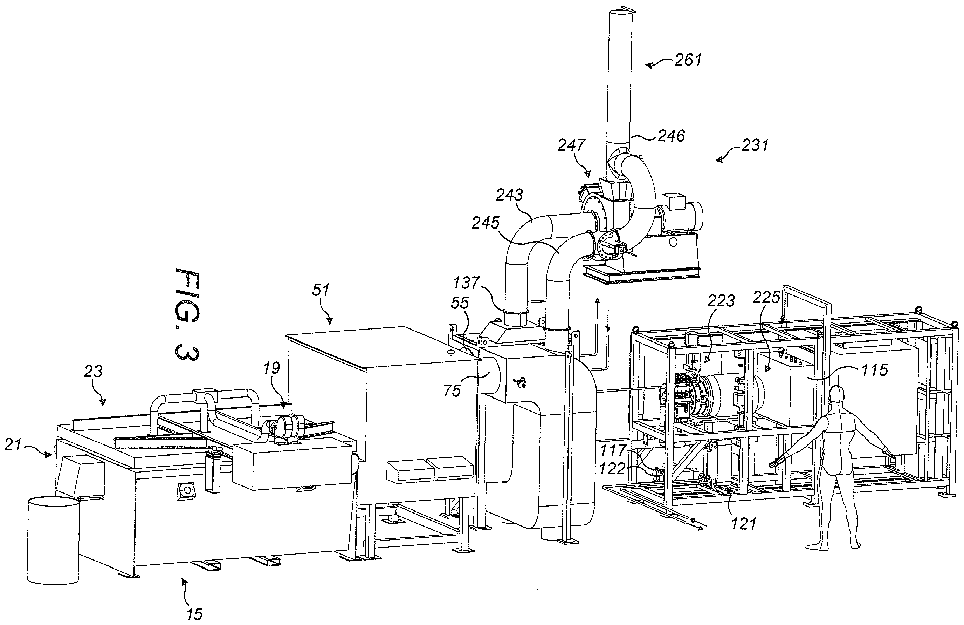

Figure 3 illustrates a perspective view of the system of Figure 1, with the enclosure removed;

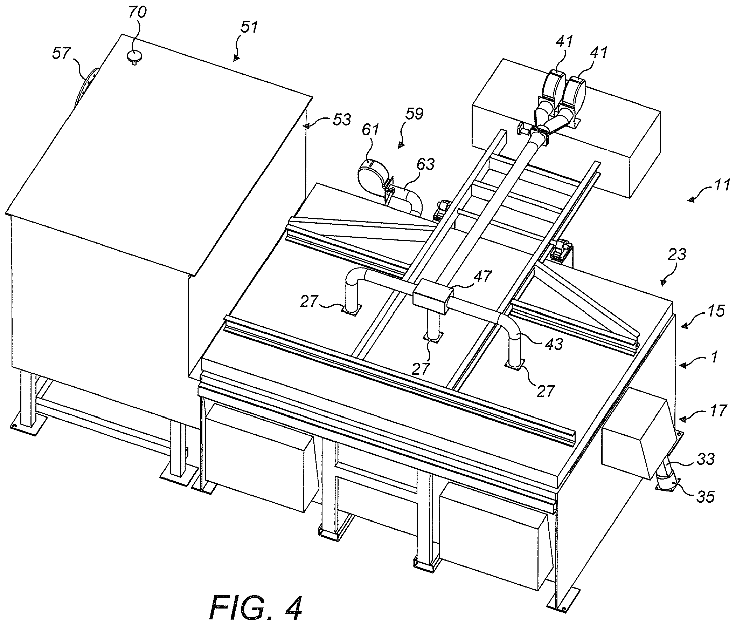

Figure 4 illustrates a perspective view of an assembly of the gasifier and the combustor of the system of Figure 1;

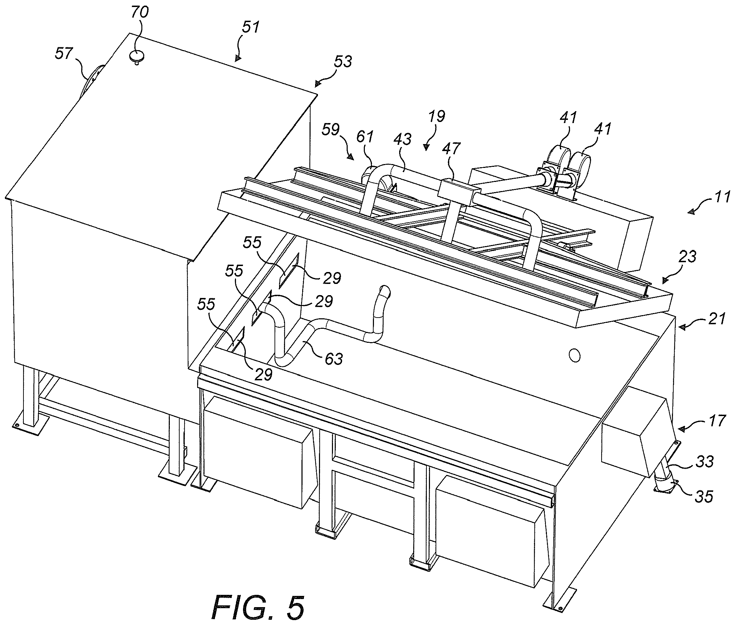

Figure 5 illustrates a perspective view of Figure 4, with the lid of the gasifier in the open position;

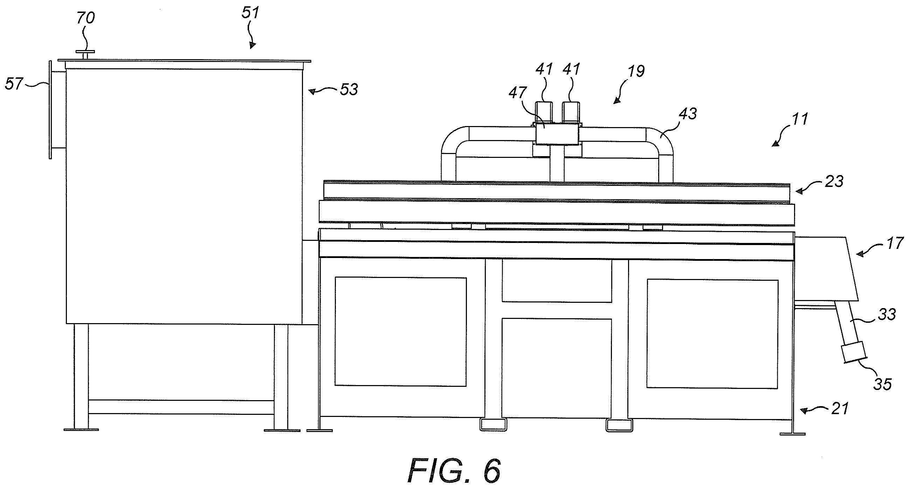

Figure 6 illustrates one side view of the assembly of Figure 4;

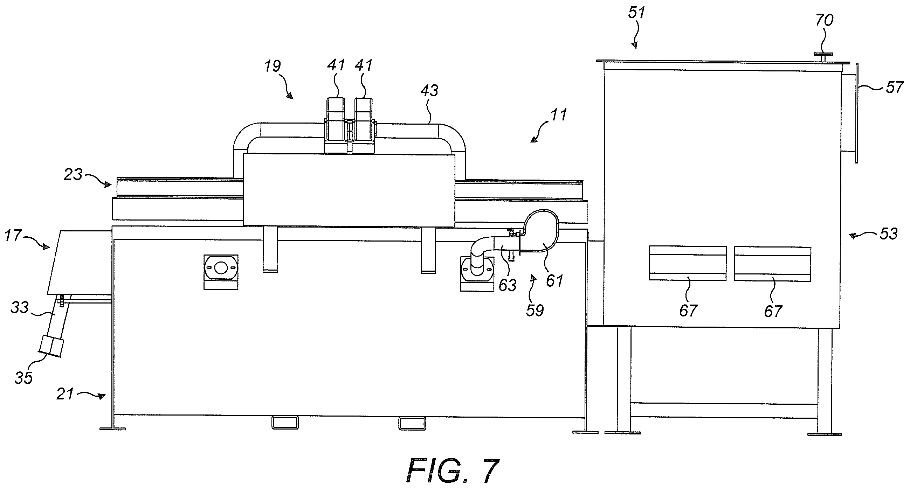

Figure 7 illustrates the other side view of the assembly of Figure 4;

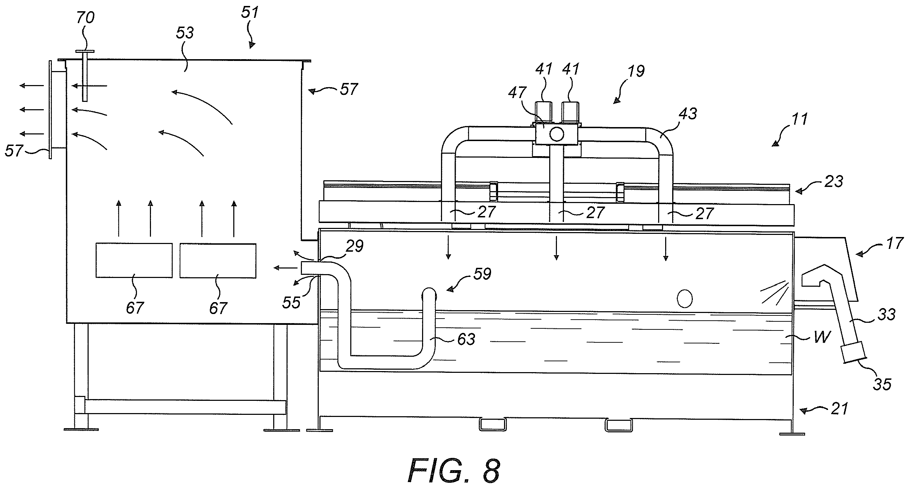

Figure 8 illustrates a longitudinal sectional view of the assembly of Figure 4;

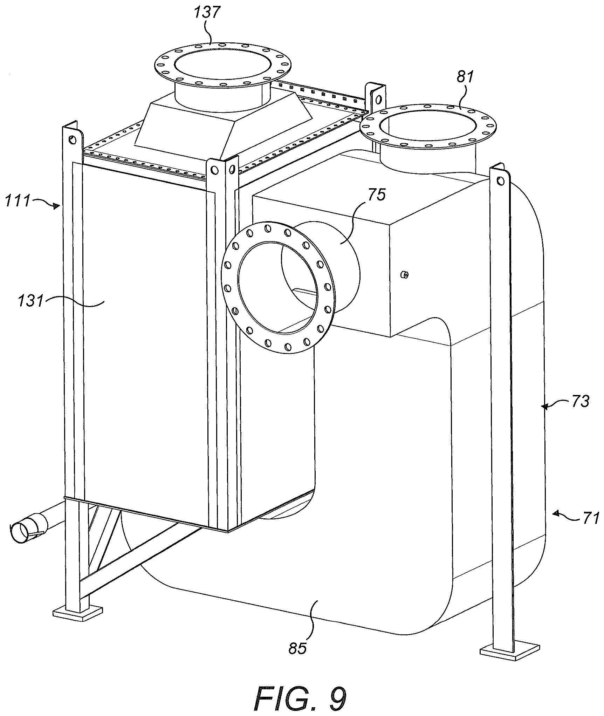

Figure 9 illustrates a perspective view from one side of an assembly of the gas tempering unit and the steam generator of the system of Figure 1;

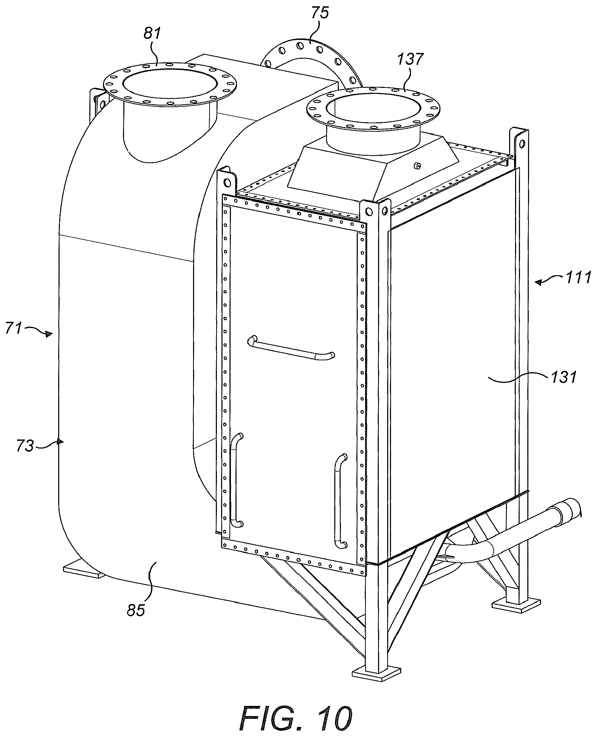

Figure 10 illustrates a perspective view from another side of the assembly of Figure 9;

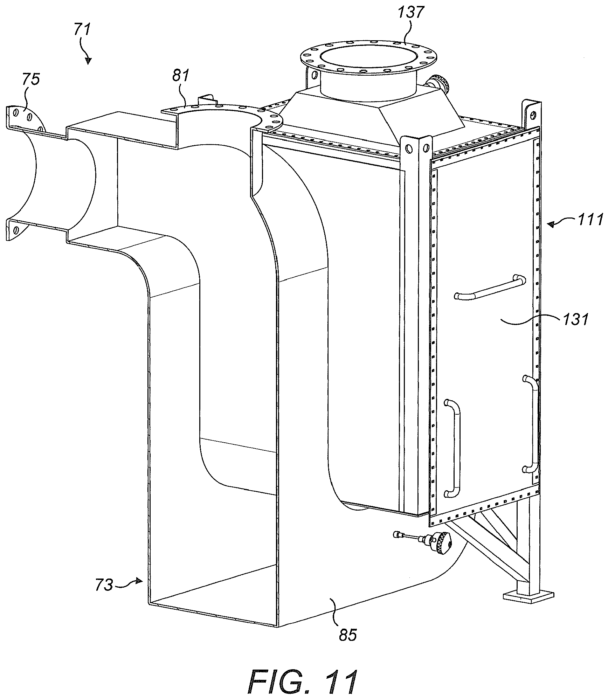

Figure 11 illustrates a part-sectional perspective view of the assembly of Figure 9;

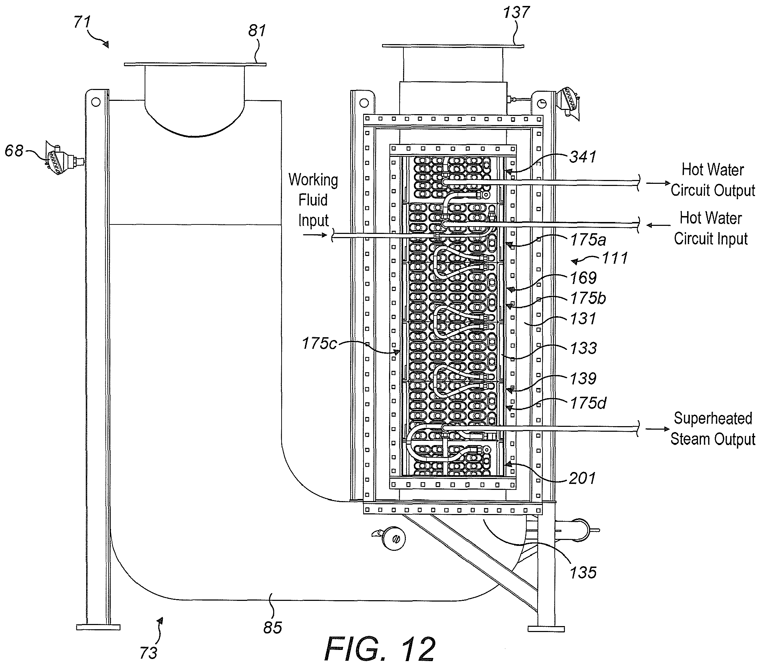

Figure 12 illustrates a cut-away side view of the assembly of Figure 9;

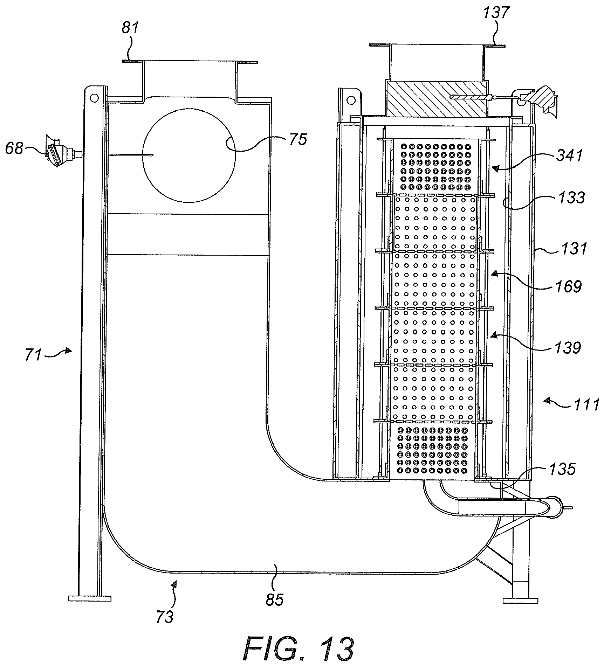

Figure 13 illustrates a vertical sectional view of the assembly of Figure 9;

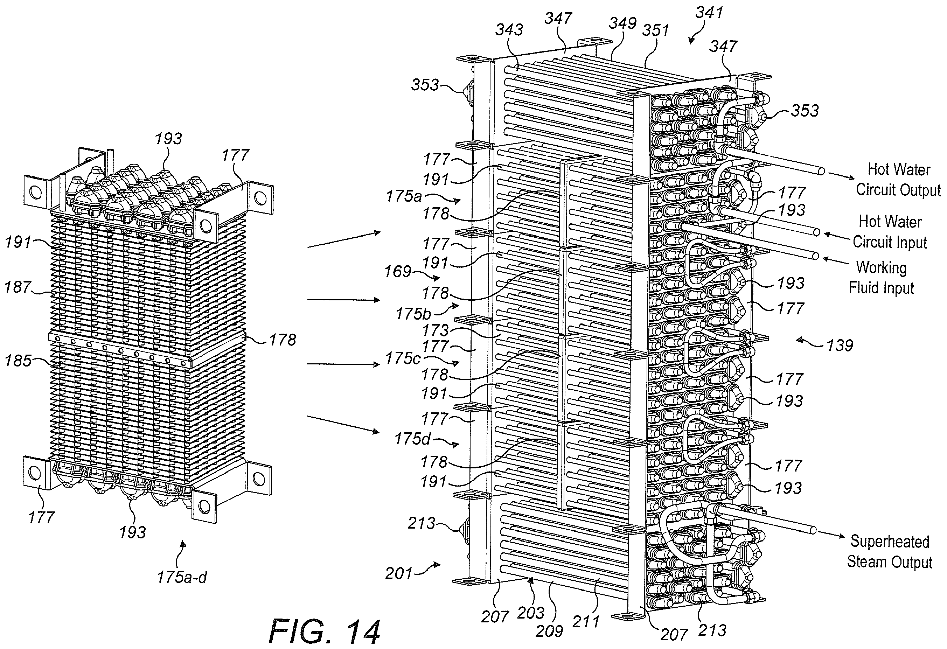

Figure 14 illustrates a fragmentary perspective view of the superheated steam generator of the assembly of Figure 9; and

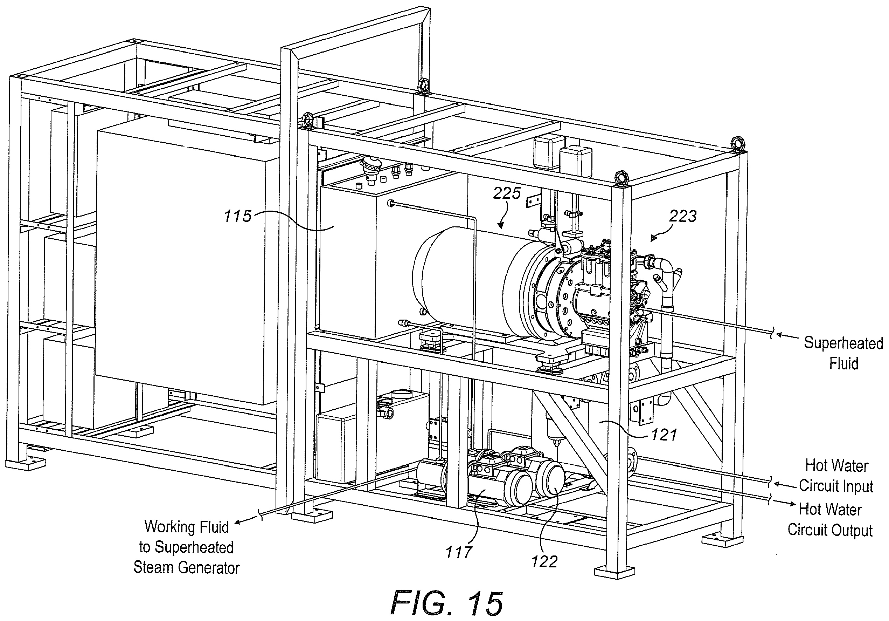

Figure 15 illustrates an enlarged perspective view of part of the superheated fluid generation unit of the system of Figure 1.

In this embodiment the energy generation system is housed in an enclosure 3, here an modified sea or shipping container.

The energy generation system comprises a gasifier 11 which receives waste product and is controlled, in a first phase, to generate syngas or synthetic gas from waste produce for combustion downstream in a combustor 51, and subsequently, in a second phase, to incinerate the waste product following extraction of the syngas to provide a stream of hot gas.

In this embodiment the waste product is a solid waste.

In one embodiment the waste product can be a refuse-derived fuel (RDF), municipal solid waste (MSW), medical waste, bio-medical waste, agricultural waste, plant waste, an mal waste, biomass, textile waste, food waste, pulp waste, tyre waste, plastic waste and manufacturing waste, or any combination thereof, for example, to achieve increased or predetermined calorific value.

In one embodiment the waste product can be combined with a material of higher calorific value, such as by mixing the material of higher calorific value with the waste product. In one embodiment the material of higher calorific value could be a waste product.

In one embodiment the waste product could be municipal solid waste (MSW) in combination with tyre waste, such as tyre particulate, for example, chips or shreds, and/or biomass.

In this embodiment the gasifier 11 comprises a primary chamber 15 which is loaded with waste product and in which the waste product is heated, a burner 17 for igniting waste product held the primary chamber 15, and an air delivery unit 19 for delivering air into the primary chamber 15.

In this embodiment the waste product is heated in batches, but in an alternative embodiment the waste product could be delivered continuously using a feed unit, such as from a hopper.

In this embodiment the primary chamber 15 comprises a receptacle 21 and a lid 23 which acts to erclose the receptacle 21.

In this embodiment the receptacle 21 and the lid 23 are lined with refractory material.

In this embodiment the primary chamber 15 includes at least one, here a plurality of inlets 27, which are fluidly connected to the air delivery unit 19 and provide for the delivery of air into the primary chamber 15.

In this embodiment the at least one inlet 27 is located in the lid 23.

In this embodiment the primary chamber 15 includes at least one, here a plurality of outlets 29, which provide for fluid communication to a secondary chamber 51, either of a stream of syngas or a stream of heated air, as will be described in more detail hereinbelow.

In one embodiment the burner 17 includes an air supply 33 and a control valve 35, here with a flap valve, which regulates a supply of air to the burner 17 and so enables control of the ignition.

With this arrangement, the burner 17 provides for ignition of the waste product, and control of the rate of ignition allows for control of the rate of burning of the waste product. As will be described in more detail hereinbelow, the present inventors have recognized that the rate of burning of the waste product can be carefully regulated to generate syngas without combustion of the same, whereas, if the initial burn or ignition is too great, this can cause acceleration of the rate of burning and an environment in which substantially all of the syngas is combusted. In this way, the waste product can be utilized more effectively by controlling the heating regime within the gasifier 11, in that, in a first phase, syngas can be extracted from the waste product for downstream combustion, and following extraction of the syngas, in a second phase, the waste product is burnt to provide a stream of hot gas.

In this embodiment the burner 17 is a diesel burner.

In this embodiment the air delivery unit 19 includes at least one fan 41, which is controllable to maintain a predetermined delivery of air into the primary chamber 15, and ducting 43 which fluidly connects the at least one fan 41 to the at least one inlet 27 of the primary chamber 15.

As noted hereinabove, the present inventors have recognized that, by controlling the rate of burning of the waste product, a prolonged generation of syngas can be achieved, but not such as to cause the combustion of that syngas, and this control is provided by regulating delivery of air to the primary chamber 15.

In this embodiment the air delivery unit 19 is controlled such as to cycle between first periods in which air is delivered to the primary chamber 15 and second periods in which substantially no air is delivered to the primary chamber 15. The present inventors have recognized that this mode of control prevents acceleration of the burn of the waste product.

In this embodiment the air delivery unit 19 includes first and second fans 41.

In this embodiment the air delivery unit 19 comprises a check valve 47, here a butterfly valve, which fluidly connects the at least one inlet 27 of the primary chamber 15 to the at least one fan 41 and prevents backflow upstream of the valve 47.

The energy generation system further comprises a combustor 51 in which syngas, as generated in the first phase of operation of the gasifier 11, is burnt to generate a stream of heated gas.

In this embodiment the combustor 51 comprises a combustion or secondary chamber 53 which includes at least one inlet 55 which is fluidly connected to the at least one outlet 29 of the primary chamber 15, through which a stream of gas is delivered, syngas in the first phase of operation and heated air in a second, subsequent phase of operation, into the secondary chamber 53, and an outlet 57 through which a stream of heated gas is delivered.

In this embodiment the combustor 51 further comprises an air delivery unit 59 which is controllable to regulate the amount of air as delivered to the secondary chamber 53, in dependence upon the required energy output from the system.

In this embodiment the air delivery unit 59 comprises at least one fan 61, here a single fan, and oucting 63 which fluidly connects the at least one fan 61 to the secondary chamber 53.

In this embodiment the ducting 63 extends at least in part through the primary chamber 15 of the gasifier 11, such that the air which is delivered into the secondary chamber 53 is pre-heated, here to a temperature of at least 350 °C.

In this embodiment the combustor 51 further comprises at least one, here a plurality of burners 67 which are controlled to pre-heat the secondary chamber 53 and, if required, to introduce additional heat, such that the secondary chamber 53 is maintained at or above a predetermined operating temperature, such that syngas, which is delivered from the gasifier 11 during the first phase of operation of the gasifier 11, is ignited.

In this embodiment the system includes a lambda sensor 68 for sensing the composition of the stream of hot gas which is delivered from the outlet 57 of the secondary chamber 53, the output of which is utilized to regulate the supply and mass of heated air from the air delivery unit 59, in order to ensure an efficient burn of the syngas.

In this embodiment tne system includes a temperature sensor 70 for measuring the temperature of the stream of hot gas which is delivered from the secondary chamber 53, the output of which is utilized to regulate the temperature of the stream of hot gas which is delivered from the secondary chamber 53.

In this embodiment the secondary chamber 53 is maintained at a temperature of about 950 °C, optionally at least 850 °C, and optionally in the range of from about 850 °C to about 1000 °C, during the first phase of operation of the gasifier 11.

In this embodiment the secondary chamber 53 is configured such that the syngas has a residence time of greater than 2 s therein, optionally at least 3 s therein.

Operation of the gasifier 11 and the combustor 51 to produce a stream of heated gas will now be described.

The secondary chamber 53 is pre-heated to an operating temperature, here above 850 °C, using the burners 67, in order to ensure combustion of any syngas.

With the secondary chamber 53 pre-heated, the gasifier 11 is controlled, in a first mode during a first phase, to produce syngas, here by igniting the waste product using the burner 17 and regulating air supplied by the air delivery unit 19 to the primary chamber 15 of the gasifier 11, in this embodiment by cycling between first periods in which air is delivered at a first rate to the primary chamber 15 and second periods in which substantially no air is delivered or air is delivered at a second rate, lower than the first rate, to the primary chamber 15.

This produced syngas is delivered to the secondary chamber 53 and, together with heated air which is delivered to the secondary chamber 53 by the air delivery unit 59, the combustor 51 burns the syngas to generate a stream of hot gas which is delivered from the outlet 57 of the secondary chamber 53 to an air tempering unit 71, as will be described in more detail hereinbelow.

In this embodiment the composition and temperature of the stream of hot gas which is delivered from the secondary chamber 53 is measured using respective ones of the lambda sensor 68 and the temperature sensor 70, and these measurements are used to regulate the supply of air from the air delivery unit 59, in order to ensure an efficient burn of the syngas and maintain the temperature of the stream of hot gas which is delivered from the secondary chamber 53 at a desired temperature or within a desired temperature range, here a temperature of about 900 °C to about 950 °C.

This process continues for so long as syngas is being produced by the gasifier 11.

When substantially all of the syngas has been extracted from the waste product, the gasifier 11 is controlled, in a second mode during a second phase, to increase the rate of burning of the waste product by introducing a greater volume of air into the primary chamber 15, in this embodiment at a third rate, which is greater than the second rate and can be greater than the first rate, using the air delivery unit 19, and maintain a temperature in the primary chamber 15 of at least 1000 °C, optionally at least 1100 °C, to provide a stream of heated air to the secondary chamber 53 at a temperature of at least 1000 °C, optionally at least 1100 °C.

With this increased temperature in the primary chamber 15, the air delivered by the air delivery unit 19 is heated in the primary chamber 15 and passes into the secondary chamber 53 at a temperature which requires no additional heat input, and, in this second mode of operation, the burners 67 of the combustor 51 ordinarily provide no heat input.

In this embodiment the temperature of the stream of hot gas which is delivered from the secondary chamber 53 is measured using the temperature sensor 70, and this measurement is used to regulate the supply of cooler air from the air delivery unit 59, in order to maintain the temperature of the stream of hot gas which is delivered from the secondary chamber 53 at a desired temperature or within a desired temperature range, here a temperature of from about 900 °C to about 950 °C.

This process continues for so long as stream of heated gas is produced by the gasifier 11.

The energy generation system further comprises a gas tempering unit 71 for tempering the stream of heated gas as delivered by the combustor 51.

In this embodiment the gas tempering unit 71 comprises a tempering chamber 73 which includes a first inlet 75 which is fluidly connected to the outlet 57 of the secondary chamber 53, a second inlet 81 which is fluidly connected to a gas re-circulation unit 231, and an outlet 85 which is fluidly connected to a superheated fluid generation unit 101, as will be described in more detail hereinbelow.

With this configuration, the stream of heated gas is tempered by controlling the rate at which the re-circulated gas, which is at a lower temperature than the stream of heated gas, is delivered into the tempering chamber 73 in relation to the stream of heated gas.

In this embodiment the gas tempering unit 71 tempers the stream of heated gas to a temperature of from about 425 °C to about 650 °C, optionally from about 550 °C to about 650 °C.

In this embodiment the tempering chamber 73 is formed as a dust collector, in this embodiment a cyclone dust collector, for extracting particulate dust from the exhaust gas flow.

The energy generation system further comprises a superheated fluid generation unit 101 which generates a superheated fluid, in this embodiment superheated steam, from a working fluid, in this embodiment pure, de-mineralised water, optionally containing chemical additives, including oxygen scavengers and corrosion inhibitors.

The superheated steam generation unit 101 comprises a superheated fluid generator 111 which receives a stream of heated gas from the gas tempering unit 71, and generates a superheated fluid, in this embodiment superheated steam.

The superheated steam generation unit 101 further comprises a buffer tank 115 for storing a supply of the working fluid, in this embodiment water, and a first pump 117 for delivering the working fluid from the buffer tank 115 to the superheated steam generator 111 at a required flow rate and/or pressure.

The superheated steam generation unit 101 further comprises a condenser 121 in this embodiment a plate-type heat exchanger, which receives used steam from at least one steam engine 223 and condenses the used steam to a saturated liquid, in this embodiment water, and a second pump 122 for delivering the water to the buffer tank 115.

In this embodiment the condenser 121 has an input fluidly connected to a cold water supply of a hot water circuit, and an output from which heated water is delivered, such as for heating, for example, domestic or process heating.

With this configuration, the superheated steam generator 111, the buffer tank 115, the condenser 121 and the at least one steam engine 223 define a circulatory loop through which the working fluid is circulated, in being converted from a saturated liquid, here water, to a superheated fluid, here superheated steam, and back to a saturated liquid.

The superheated steam generator 111 comprises a housing 131, which defines a gas flow path 133 and has an inlet 135 at one, upstream end thereof which is fluidly connected to the outlet 85 of the gas tempering unit 71 and into which a stream of heated gas is delivered, and an outlet 137 at the other, downstream end thereof through which the stream of heated gas exits, and a superheated steam generation assembly 139 which is disposed within the gas flow path 133 of the housing 131.

The superheated steam generation assembly 139 comprises a heat exchanger unit 169 which is operative to raise the temperature of the working fluid as received from the buffer tank 115, in this embodiment to a temperature of about 260 °C, thereby providing the working fluid as saturated steam.

The heat exchanger unit 169 comprises at least one heat exchanger circuit 173, which has an input fluidly connected to the buffer tank 115 and an output from which the working fluid, as saturated steam, is delivered.

The heat exchanger unit 169 comprises at least one, in this embodiment a plurality of heat exchanger modules 175a-d, which are fluidly connected, such that the heat exchanger modules 175a-d each provide part of the flow path of the at least one heat exchanger circuit 173.

In this embodiment the heat exchanger modules 175a-d define an *nxm* array, here a 1x4 array.

In this embodiment the heat exchanger modules 175a-d each comprise first and second outer support elements 177 which are disposed in spaced relation and define a width of the heat exchanger unit 169, and an intermediate support element 178, here central between the outer support elements 177.

In this embodiment the outer support elements 177 of the heat exchanger modules 175a-d are interconnected by sliding couplings, which allow relative movement of the heat exchanger modules 175a-d, thus accommodating relative expansion thereof.

In this embodiment the heat exchanger modules 175a-d each comprise heat exchanger pipework 185 which extends between the outer support elements 177 of the heat exchanger modules 175a-d, and a plurality of fins 187 which extend in spaced, parallel relation to the outer support elements 177 of the heat exchanger modules 175a-d. For purposes of illustration, only some of the fins 187 are illustrated in certain of the views.

In this embodiment the heat exchanger pipework 185 comprises a plurality of tube sections 191, which are disposed in spaced relation, a plurality of tube end couplings 193 which fluidly connect the open ends of adjacent tube sections 191.

In this embodiment the tube sections 191 are formed of seamless stainless steel tube, here having an external diameter of 12.7 mm and a 16 swg wall thickness.

With this configuration, the tube sections 191 and the pipe end couplings 193 provide continuous flow paths which extend in alternate directions across a width of the heat exchanger unit 169, and thus the gas flow passage 133 of the housing 131.

In this embodiment the fins 187 each comprise a single, continuous sheet element, which includes a plurality of apertures through which extend respective ones of the tube sections 191 of the respective heat exchanger module 175.

In this embodiment the fins 187 are thermally connected to respective ones of the tube sections 191, here brazed.

The superheated steam generation assembly 139 further comprises a superheater unit 201 which is located at an upstream end thereof and upstream of the heat exchanger unit 169, and is operative further to raise the temperature of the received working fluid, in this embodiment saturated steam, to a temperature of from about 300 °C to about 420 °C, preferably at a temperature of about 380 °C, and with a pressure of up to 60 bar, thereby providing superheated fluid to the at least one steam engine 223.

The superheater unit 201 comprises at least one superheater circuit 203, which has an input fluidly connected to the output of the at least one heat exchanger circuit 173 and an output from which a superheated fluid, in this embodiment superheated steam, is delivered.

In this embodiment the superheater unit 201 comprises first and second outer support elements 207 which are disposed in spaced relation and define a width of the superheater unit 201, and superheater pipework 209 which extends between the outer support elements 207.

In this embodiment the superheater pipework 209 comprises a plurality of tube sections 211, which are disposed in spaced relation, a plurality of tube end couplings 213 which fluidly connect the open ends of adjacent tube sections 211.

In this embodiment the tube sections 211 are formed of seamless stainless steel tube, here having an external diameter of 19.05 mm and a wall thickness of 1.65 mm.

With this configuration, the tube sections 211 and the pipe end couplings 213 provide continuous flow paths which extend in alternate directions across a width of the superheater unit 201, and thus the gas flow passage 133 of the housing 131.

The steam generation unit 101 further comprises at least one steam engine 223, in this embodiment a steam expander, which receives the superheated steam from the superheated steam generator 111, and at least one power generator 225 which is driven by the at least one steam engine 223 to generate power, in this embodiment electricity, which can be supplied to the electrical grid.

The energy generation system further comprises a re-circulation unit 231 though which heated gas which is exhausted though the steam generator 111 is partially re-circulated into the gas tempering unit 71.

In this embodiment the re-circulation unit 231 comprises an inlet 243 which is fluidly connected to the outlet 137 of the superheated steam generator 111, a first outlet 245 which is fluidly connected to the gas tempering unit 71, a second outlet 246 which is fluid connected to atmosphere through a muffler 261, and a gas flow unit 247 which is fluidly connected between the inlet 243 and the first outlet 245 and is controllable to re-circulate a fraction of the exhaust gas to the gas tempering unit 71 for the purpose of tempering the stream of heated gas which is supplied from the combustor 51.

In this embodiment the fraction of exhaust gas which is re-circulated to the gas tempering unit 71 is determined to maintain a mass balance within the system.

In this embodiment the gas flow unit 247 comprises a re-circulation fan, and can further comprise at least one valve to regulate relative flows through the first and second outlets 245, 246.

In this embodiment re-circulation unit 231 further comprises a muffler 261 which is fluidly connected to the second outlet 246, through which that part of the exhaust gas which is not re-circulated is exhausted to atmosphere.

The energy generation system further comprises a water heater unit 341 which is operative to raise the temperature of a water supply, such as for heating, for example, domestic or process heating.

The water heater unit 341 comprises at least one heater circuit 343, which has an input fluidly connected to a cold water supply of a hot water circuit, and an output from which heated water is delivered. In one embodiment the hot water circuit of the water heater unit 341 can be utilized together with the hot water circuit from the condenser 121 to provide a single supply of hot water.

In this embodiment the water heater unit 341 comprises first and second outer support elements 347 which are disposed in spaced relation and define a width of the water heater unit 341, and heater pipework 349 which extends between the outer support elements 347.

In this embodiment the heater pipework 349 comprises a plurality of tube sections 351, which are disposed in spaced relation, and a plurality of tube end couplings 353 which fluidly connect the open ends of adjacent tube sections 351.

In this embodiment the tube sections 351 are formed of seamless stainless steel tube, here having an external diameter of 19.05 mm and a wall thickness of 1.65 mm.

With this configuration, the tube sections 351 and the pipe end couplings 353 provide continuous flow paths which extend in alternate directions across a width of the heater unit 341, and thus the gas flow passage 133 of the housing 131.

Finally, it will be understood that the present invention has been described in its preferred embodiments and can be modified in many different ways without departing from the scope of the invention as defined by the appended claims.

For example, in the described embodiment, the energy generation system has been described in relation to an application for power generation, but the present invention has other application, such as in processing stations where the superheated steam is utilized directly, for example, in pasteurizing food or waste products.

Also, the described embodiment includes a single steam engine 223 and the steam generation module 139 includes a single fluid circuit associated with the single steam engine 223, but could comprise a plurality of steam engines 223 and the superheated steam generation assembly 139 could include a corresponding plurality of fluid circuits.

## Claims

1. A heated gas generation system for generating heated gas from waste product, the system comprising:
a gasifier which includes a primary chamber for receiving waste product and includes at least one air inlet and at least one gas outlet,
wherein the gasifier is controlled, in a first mode of operation, to heat the waste product to extract syngas or synthetic gas from the waste product and deliver a steam of syngas through the at least one gas outlet, and subsequently, in a second mode of operation, following extraction of syngas from the waste product, to burn the waste product to provide a stream of heated gas and deliver the stream of heated gas through the at least one gas outlet, wherein the gasifier includes a burner for igniting the waste product held in the primary chamber and an air delivery unit for delivering air into the primary chamber through the at least one air inlet of the primary chamber,
wherein the air delivery unit of the gasifier is controlled to cycle between first periods in which air is delivered to the primary chamber at or above a first rate and second periods in which air is delivered to the primary chamber at or below a second rate; and
a combustor which includes at least one gas inlet which is fluidly connected to the at least one gas outlet of the primary chamber, at least one air inlet and at least one gas outlet, wherein the combustor is controlled, in a first mode of operation, to burn the stream of syngas which is delivered from the primary chamber in the first mode of operation of the gasifier to generate a stream of heated gas through the at least one gas outlet of the combustor, and, in a second mode of operation, delivers the stream of heated gas which is delivered from the primary chamber in the second mode of operation of the gasifier through the at least one gas outlet of the combustor.

2. The system of claim 1, wherein the burner of the gasifier includes an air supply and a control valve which regulates a supply of air to the burner of the gasifier and so controls a rate of ignition of the waste product.

3. The system of claim 1 or 2, wherein the air delivery unit of the gasifier includes at least one fan which is controlled to regulate delivery of air into the primary chamber.

4. The system of any of claims 1 to 3, wherein substantially no air is delivered to the primary chamber in the second periods.

5. The system of any of claims 1 to 4, wherein the combustor includes an air delivery unit which is controlled to regulate an amount of air delivered through the at least one air inlet of the combustor, optionally the air delivery unit of the combustor comprises at least one fan which is controlled to regulate delivery of air through the at least one air inlet of the combustor.

6. A heated gas generation system for generating heated gas from waste product, the system comprising:
a gasifier which includes a primary chamber for receiving waste product and includes at least one air inlet and at least one gas outlet,
wherein the gasifier is controlled, in a first mode of operation, to heat the waste product to extract syngas or synthetic gas from the waste product and deliver a steam of syngas through the at least one gas outlet, and subsequently, in a second mode of operation, following extraction of syngas from the waste product, to burn the waste product to provide a stream of heated gas and deliver the stream of heated gas through the at least one gas outlet; and
a combustor which includes at least one gas inlet which is fluidly connected to the at least one gas outlet of the primary chamber, at least one air inlet and at least one gas outlet, wherein the combustor is controlled, in a first mode of operation, to burn the stream of syngas which is delivered from the primary chamber in the first mode of operation of the gasifier to generate a stream of heated gas through the at least one gas outlet of the combustor, and, in a second mode of operation, delivers the stream of heated gas which is delivered from the primary chamber in the second mode of operation of the gasifier through the at least one gas outlet of the combustor,
wherein the combustor includes an air delivery unit which is controlled to regulate an amount of air delivered through the at least one air inlet of the combustor, the air delivery unit of the combustor including a duct which extends at least in part through or adjacent the primary chamber, such that the air which is delivered to the combustor through the at least one air inlet thereof is pre-heated.

7. The system of claim 6, wherein:
(I) the gasifier includes a burner for igniting the waste product held in the primary chamber and an air delivery unit for delivering air into the primary chamber through the at least one air inlet of the primary chamber, optionally the burner of the gasifier includes an air supply and a control valve which regulates a supply of air to the burner of the gasifier and so controls a rate of ignition of the waste product, optionally the air delivery unit of the gasifier includes at least one fan which is controlled to regulate delivery of air into the primary chamber;
(II) the air which is delivered to the combustor through the at least one air inlet thereof is pre-heated to a temperature of at least 350 °C; and/or
(III) the air delivery unit of the combustor comprises at least one fan which is controlled to regulate delivery of air through the at least one air inlet of the combustor.

8. The system of any of claims 1 to 7, wherein the combustor includes a secondary chamber and is controlled to maintain the secondary chamber, during the first mode of operation of the gasifier, at a temperature of at least 850 °C, optionally at least 900 °C, optionally in the range of from about 850 °C to about 1000 °C, optionally the gasifier is controlled, in the second mode of operation of the gasifier, to maintain the primary chamber at a temperature of at least 1000 °C, optionally at least 1100 °C, to provide a stream of heated air to the combustor at a temperature of at least 1000 °C, optionally at least 1100 °C.

9. A heated gas generation system for generating heated gas from waste product, the system comprising:
a gasifier which includes a primary chamber for receiving waste product and includes at least one air inlet and at least one gas outlet,
wherein the gasifier is controlled, in a first mode of operation, to heat the waste product to extract syngas or synthetic gas from the waste product and deliver a stream of syngas through the at least one gas outlet, and subsequently, in a second mode of operation, following extraction of syngas from the waste product, to burn the waste product to provide a stream of heated gas and deliver the stream of heated gas through the at least one gas outlet;
a combustor which includes at least one gas inlet which is fluidly connected to the at least one gas outlet of the primary chamber, at least one air inlet and at least one gas outlet, wherein the combustor is controlled, in a first mode of operation, to burn the stream of syngas which is delivered from the primary chamber in the first mode of operation of the gasifier to generate a stream of heated gas through the at least one gas outlet of the combustor, and, in a second mode of operation, delivers the stream of heated gas which is delivered from the primary chamber in the second mode of operation of the gasifier through the at least one gas outlet of the combustor;
a gas tempering unit which includes a first inlet which is fluidly connected to the at least one gas outlet of the combustor and
receives the stream of heated gas therefrom, a second inlet through which a supplemental supply of gas from an exhaust gas flow, having a temperature lower than that of the stream of heated gas from the combustor, is delivered, and an outlet through which a tempered stream of heated gas is delivered, wherein the gas tempering unit tempers the stream of heated gas delivered from the combustor by mixing the stream of heated gas delivered from the combustor with the supplemental supply of gas; and
a superheated fluid generator which receives the tempered stream of heated gas from the gas tempering unit, and generates a superheated fluid from a working fluid.

10. The system of claim 9, wherein:
(I) the gasifier includes a burner for igniting the waste product held in the primary chamber and an air delivery unit for delivering air into the primary chamber through the at least one air inlet of the primary chamber, optionally the burner of the gasifier includes an air supply and a control valve which regulates a supply of air to the burner of the gasifier and so controls a rate of ignition of the waste product, optionally the air delivery unit of the gasifier includes at least one fan which is controlled to regulate delivery of air into the primary chamber;
(II) the combustor includes an air delivery unit which is controlled to regulate an amount of air delivered through the at least one air inlet of the combustor, optionally the air delivery unit of the combustor comprises at least one fan which is controlled to regulate delivery of air though the at least one air inlet of the combustor;
(III) the combustor includes a secondary chamber which, during the first mode of operation of the gasifier, is maintained at a temperature of at least 850 °C, optionally at least 900 °C, and optionally in the range of from about 850 °C to about 1000 °C, optionally the gasifier is controlled, in the second mode of operation, to maintain the primary chamber at a temperature of at least 1000 °C, optionally at least 1100 °C, to provide a stream of heated air to the combustor at a temperature of at least 1000 °C, optionally at least 1100 °C, optionally the combustor includes at least one burner which is controlled to pre-heat the secondary chamber; and/or
(IV) the gas tempering unit tempers the stream of heated gas to a temperature of from about 425 °C to about 650 °C.

11. The system of claim 9 or 10, further comprising:
a re-circulation unit though which exhaust gas, which is exhausted through the superheated steam generator, is partially re-circulated into the gas tempering unit, optionally the re-circulation unit comprises an inlet which is fluidly connected to the outlet of the superheated steam generator, a first outlet which is fluidly connected to the gas tempering unit, a second outlet which is fluid connected to atmosphere, and a gas flow unit which is fluidly connected between the inlet and the first outlet and is controllable to re-circulate a fraction of the exhaust gas to the gas tempering unit to temper the stream of heated gas which is supplied from the combustor, optionally the gas flow unit comprises a re-circulation fan.

12. Use of the system of any of claims 1 to 11 with waste product selected from a solid waste refuse-derived fuel (RDF), a municipal solid waste (MSW), medical waste, bio-medical waste, agricultural waste, plant waste, animal waste, biomass, textile waste, food waste, pulp waste, tyre waste, plastic waste, manufacturing waste, or any combination thereof.

13. The use of claim 12, wherein the waste product is combined with a material of higher calorific value.
